# EUROPÄISCHE PATENTANMELDUNG

(11) **EP 1 686 782 A1**
(43) Veröffentlichungstag der Anmeldung: **02.08.2006**
(21) Anmeldenummer: 05001641.9
(22) Anmeldetag: 27.01.2005
(51) Int. Cl.: H04M 3/523

(54) **Rückrufverfahren**

(71) Anmelder: CALLAX Telecom Holding GmbH, 40211 Düsseldorf (DE)
(72) Erfinder: Ömer Kaan Varol, 40468 Düsseldorf (DE)
(74) Vertreter: Stenger, Watzke & Ring

(57) **Zusammenfassung**

Die Erfindung betrifft ein Verfahren zur Vermittlung eines Telefongespräches zwischen einem Anrufenden und einem vom Anrufenden aus einer Mehrzahl möglicher Gesprächsteilnehmer auswählbaren Gesprächsteilnehmer. Um ein Verfahren zu schaffen, das zur Steigerung der Zufriedenheit des Anrufenden die Entstehung unnötiger Kosten für den Anrufenden vermeiden hilft, wird mit der Erfindung ein Verfahren vorgeschlagen, bei dem die Rufnummer des Anrufenden an ein Vermittlungssystem übertragen und in einem Datenbankabgleich auf Gültigkeit überprüft wird, bei dem vom Anrufenden eine den vom Anrufenden gewünschten Gesprächsteilnehmer identifizierende Information an das Vermittlungssystem übertragen wird, wobei die Verfügbarkeit des vom Anrufenden gewünschten Gesprächsteilnehmer vom Vermittlungssystem geprüft und die bestehende kommunikationstechnische Verbindung zwischen Anrufendem und Vermittlungssystem im Falle der Verfügbarkeit getrennt wird, bei dem der vom Anrufenden gewünschte Gesprächsteilnehmer vom Vermittlungssystem über die eingegangene Telefongesprächsanfrage des Anrufenden automatisch informiert wird, bei dem der vom Anrufenden gewünschte Gesprächsteilnehmer den Anrufenden zurückruft, wobei durch das Vermittlungssystem erst nach einer vorhergehenden Autorisierung durch den Anrufenden eine kommunikationstechnische Verbindung Gesprächsteilnehmer den Anrufenden zurückruft, wobei durch das Vermittlungssystem erst nach einer vorhergehenden Autorisierung durch den Anrufenden eine kommunikationstechnische Verbindung zwischen Anrufendem und gewünschtem Gesprächsteilnehmer aufgebaut wird und bei dem nach erfolgtem Telefongespräch zwischen Anrufendem und gewünschtem Gesprächsteilnehmer die hierfür zu zahlende Gebühr vom Vermittlungssystem automatisch berechnet und dem Anrufenden in Rechnung gestellt wird.

## Beschreibung

Die Erfindung betrifft ein Verfahren zur Vermittlung eines Telefongespräches zwischen einem Anrufenden und einem vom Anrufenden aus einer Mehrzahl möglicher Gesprächsteilnehmer auswählbaren Gesprächsteilnehmern.

Aus dem Stand der Technik sind sogenannte "Call-Center" bekannt geworden. Sie werden häufig von Unternehmen eingerichtet und sollen dazu dienen, Kunden des Unternehmens als Anlaufstelle zu dienen, wenn diese Rückfragen zum Unternehmen selbst oder zu Produkten des Untemehmens haben.

In aller Regel bestehen aus dem Stand der Technik bekannte Call-Center aus einem Vermittlungssystem einerseits und mehreren Telefonarbeitsplätzen andererseits. Dabei sind die Telefonarbeitsplätze von möglichen Gesprächsteilnehmern für den das Call-Center Anrufenden besetzt. Eine direkte Anwahl der möglichen Gesprächsteilnehmer ist durch den Anrufenden nicht möglich, vielmehr wird eine kommunikationstechnische Verbindung zwischen dem Anrufenden und einem vom Anrufenden gewünschten Gesprächsteilnehmer über das Vermittlungssystem organisiert. Das Vermittlungssystem ist über eine zumeist bundesweit gültige Rufnummer erreichbar, die der Anrufende zwecks kommunikationstechnischer Verbindung mit dem Call-Center anzuwählen hat. Dabei erfolgt die Vermittlung eines Telefongespräches zwischen dem Anrufenden und einem vom Anrufenden gewünschten Gesprächsteilnehmer typischerweise wie folgt:
Der Anrufende wählt die Nummer des Call-Centers und gelangt an die Vermittlungsstelle, d. h. das Vermittlungssystem. In aller Regel spielt das Vermittlungssystem nach Eingang des Anrufes dem Anrufenden eine Bandansage vor. Inhalt einer solchen Bandansage kann beispielsweise ein Willkommensgruß oder eine Information über die weitere Vermittlung des Anrufenden zu einem Gesprächsteilnehmer sein. In diesem Zusammenhang ist es aus dem Stand der Technik bekannt, daß das Vermittlungssystem dem Anrufenden in Art einer Vorselektion mögliche Themenbereiche, zu denen der Anrufende eine Frage haben könnte, vorgibt, aus denen der Anrufende dann auswählen kann. Nach erfolgter Auswahl durch den Anrufenden stellt das Vermittlungssystem sodann eine kommunikationstechnische Verbindung zwischen dem Anrufenden und einem Gesprächsteilnehmer aus dem Bereich des vom Anrufenden zuvor ausgewählten Themenkomplexes her. Sollte der ausgewählte Gesprächsteilnehmer nicht verfügbar sein, weil er beispielsweise gerade ein Gespräch führt, so wird dem Anrufenden dies vom Vermittlungssystem mitgeteilt und er wird darum gebeten, abzuwarten, bis der ausgewählte Gesprächsteilnehmer wieder zur Verfügung steht. Zur Überbrückung der Wartezeit wird der Anrufende zumeist in eine Warteschleife geschaltet.

Die Anwahl eines Call-Centers ist in aller Regel zu Lasten des Anrufenden gebührenpflichtig. Dieser Umstand ist für den Anrufenden insbesondere dann ein Ärgernis, wenn er vom Vermittlungssystem in die Warteschleife geschaltet wird und er für die Dauer der Wartezeit, die zum Teil sehr beträchtlich sein kann, die anfallenden Telefongebühren zu begleichen hat. Legt der Anrufende nach einiger Zeit des Wartens enttäuscht auf, so muß er, obgleich er nicht zur Beantwortung seiner Fragen an einen gewünschten Gesprächsteilnehmer durchgestellt wurde, die Gebühren für seinen getätigten Anruf zahlen. Wählt er nach einiger Zeit das Call-Center erneut an, so fallen neue Telefongebühren an, wobei das Vermittlungssystem dem Wiederholungsanrufer keine höhere Prioritätsvermittlung zuordnet, denn ist dieses nicht darüber informiert, daß der Anrufende zum wiederholten Mal versucht, mit einem Gesprächsteilnehmer des Call-Centers verbunden zu werden. Diese Praxis hat in der Vergangenheit dazu geführt, daß Call-Center einen schlechten Ruf bekommen haben, insbesondere auch deshalb, weil die Vermutung naheliegt, daß jeder Anrufende zunächst einmal in eine für ihn gebührenpflichtige Warteschleife geschaltet wird, bevor er mit einem von ihm gewünschten Gesprächsteilnehmer verbunden wird.

Ausgehend vom vorgenannten Stand der Technik ist es **Aufgabe** der Erfindung, ein neuartiges Verfahren zur Vermittlung eines Telefongespräches zwischen einem Anrufenden und einem vom Anrufenden aus einer Mehrzahl möglicher Gesprächsteilnehmer auswählbaren Gesprächsteilnehmer bereitzustellen, das zur Steigerung der Zufriedenheit des Anrufenden die Entstehung unnötiger Kosten für den Anrufenden vermeiden hilft.

Zur **Lösung** dieser Aufgabe wird mit der Erfindung vorgeschlagen ein Verfahren zur Vermittlung eines Telefongespräches zwischen einem Anrufenden und einem vom Anrufenden aus einer Mehrzahl möglicher Gesprächsteilnehmer auswählbaren Gesprächsteilnehmer, bei dem die Rufnummer des Anrufenden an ein Vermittlungssystem übertragen und in einem Datenbankabgleich auf Gültigkeit überprüft wird, bei dem vom Anrufenden eine den vom Anrufenden gewünschten Gesprächsteilnehmer identifizierende Information an das Vermittlungssystem übertragen wird, wobei die Verfügbarkeit des vom Anrufenden gewünschten Gesprächsteilnehmer vom Vermittlungssystem geprüft und die bestehende kommunikationstechnische Verbindung zwischen Anrufendem und Vermittlungssystem im Falle der Verfügbarkeit getrennt wird, bei dem der vom Anrufenden gewünschte Gesprächsteilnehmer vom Vermittlungssystem über die eingegangene Telefongesprächsanfrage des Anrufenden automatisch informiert wird, bei dem der vom Anrufenden gewünschte Gesprächsteilnehmer den Anrufenden zurückruft, wobei durch das Vermittlungssystem erst nach einer vorhergehenden Autorisierung durch den Anrufenden eine kommunikationstechnische Verbindung zwischen Anrufendem und gewünschtem Gesprächsteilnehmer aufgebaut wird und bei dem nach erfolgtem Telefongespräch zwischen Anrufendem und gewünschtem Gesprächsteilnehmer die hierfür zu zahlende Gebühr vom Vermittlungssystem automatisch berechnet und dem Anrufenden in Rechnung gestellt wird.

Die Besonderheit des erfindungsgemäßen Verfahrens liegt im Unterschied zum Stand der Technik darin, daß der Anrufende, nachdem er sich beim Vermittlungssystem angemeldet hat, das Telefongespräch beendet und von dem von ihm gewünschten Gesprächsteilnehmer zurückgerufen wird, sobald dieser frei ist. Der Rückruf vom Gesprächsteilnehmer wird als sogenanntes R-Gespräch geführt, d.h. der Anrufende, der auf Wunsch vom ausgewählten Gesprächsteilnehmer zurückgerufen wird, trägt die Kosten für das mit dem Gesprächsteilnehmer gewünschten Rückruftelefonat.

Von Vorteil des erfindungsgemäßen Verfahrens ist insbesondere, daß der Anrufende keinerlei unnötigen Kosten zu tragen hat, die beispielsweise dadurch entstehen, daß der Anrufende, wie aus dem Stand der Technik bekannt, in eine Warteschleife geschaltet wird, falls der gewünschte Gesprächsteilnehmer nicht zur Verfügung steht. Für den Anrufenden im einzelnen unter Umständen nicht zu überblickende Telefonkostengebühren können so in vorteilhafterweise vermieden werden. Dies schafft gegenüber dem Anrufenden Vertrauen und bewirkt in vorteilhafterweise eine gesteigerte Zufriedenheit beim Anrufenden.

Das erfindungsgemäße Verfahren wird im einzelnen wie folgt durchgeführt:
Der Anrufende wählt über eine zentrale Nummer das Vermittlungssystem beispielsweise eines Call-Centers an. Die Rufnummer des Anrufenden wird an das Vermittlungssystem übertragen. Dieses überprüft die Rufnummer des Anrufenden in einem Datenbankabgleich auf Gültigkeit. So z. B. daraufhin, ob die Rufnummer des Angerufenen eine zulässige Rufnummer ist, d.h. eine solche, über die der Anrufende nach erfolgreich geführtem Telefonat mit einem gewünschten Gesprächsteilnehmer hinsichtlich der entstandenen Telefongebühren belastet werden kann. Ergibt diese Gültigkeitsprüfung, daß die Rufnummer des Anrufenden nicht zulässig ist, so wird dieser hierüber informiert und das Gespräch wird beendet. Verläuft die Gültigkeitsprüfung positiv, so wird nach Aufforderung durch das Vermittlungssystem vom Anrufenden eine den vom Anrufenden gewünschten Gesprächsteilnehmer identifizierende Information an das Vermittlungssystem übertragen. Eine solche den gewünschten Gesprächsteilnehmer identifizierende Information kann beispielsweise eine vom Vermittlungssystem zuvor benannte Identifikationsnummer, der Name des gewünschten Gesprächsteilnehmers oder dergleichen sein. Entscheidend ist allein, daß das Vermittlungssystem darüber informiert ist, welchen Gesprächsteilnehmer der Anrufende zu sprechen wünscht. Im Falle eines Call-Centers kann dies auch eine Gruppe von möglichen Gesprächsteilnehmern sein.

Sobald dem Vermittlungssystem der gewünschte Gesprächsteilnehmer bekannt ist, prüft dieses automatisch ob der gewünschte Gesprächsteilnehmer überhaupt zur Verfügung steht. Ergibt diese Prüfung, daß der gewünschte Gesprächsteilnehmer nicht zur Verfügung steht, so wird dies dem Anrufenden mitgeteilt und ihm wird die Möglichkeit gegeben, einen anderen Gesprächsteilnehmer zu wählen. Tut er dies nicht, so wird das Gespräch beendet. Steht indes der vom Anrufenden gewünschte Gesprächsteilnehmer zur Verfügung, so wird dies dem Anrufenden mitgeteilt und er wird darüber informiert, daß der gewünschte Gesprächsteilnehmer den Anrufenden so schnell als möglich zurückruft. Die telekommunikationstechnische Verbindung zwischen Anrufendem und Vermittlungssystem wird sodann getrennt.

Die vom Vermittlungssystem aufgenommene Informationen werden an den gewünschten Gesprächsteilnehmer automatisch weitergeleitet. Dieser ruft sodann den Anrufenden zurück, wobei durch das Vermittlungssystem erst nach einer vorhergehenden Autorisierung durch den Anrufenden eine kommunikationstechnische Verbindung zwischen Anrufendem und gewünschtem Gesprächsteilnehmer aufgebaut wird. Die Autorisierung durch den Anrufenden umfaßt in erster Linie seine Einverständniserklärung zur Übernahme der durch den Rückruf entstehenden Kosten. Der Rückruf des gewünschten Gesprächsteilnehmers zum Anrufenden wird als sogenanntes R-Gespräch geführt, d. h. die im Rahmen des nachfolgend zu führenden Telefongespräches entstehenden Kosten werden nicht vom gewünschten Gesprächsteilnehmer, sondern vom Zurückgerufenen, d.h. dem Anrufenden getragen. Bevor es zu einer kommunikationstechnischen Verbindung zwischen Anrufendem und gewünschtem Gesprächsteilnehmer kommt, wird der Anrufende vom Vermittlungssystem unter Angabe des gültigen Tarifs über die Kostenfolge informiert. Nur wenn der Anrufende durch Autorisierung sein Einverständnis dazu gibt, die Gebühren des zu führenden Telefongespräches zu übernehmen, schaltet das Vermittlungssystem die kommunikationstechnische Verbindung zwischen gewünschtem Gesprächsteilnehmer und Anrufendem frei.

Nach erfolgtem Telefongespräch zwischen Anrufendem und gewünschtem Gesprächsteilnehmer wird die hierfür zu zahlende Gebühr vom Vermittlungssystem automatisch berechnet und dem Anrufenden in Rechnung gestellt.

Wie vorstehend bereits beschrieben, ist ein erster Vorteil des erfindungsgemäßen Verfahrens darin zu sehen, daß im Vergleich zum Stand der Technik unnötigerweise entstehende Kosten für den Anrufenden vermieden werden. Von Vorteil des erfindungsgemäßen Verfahrens ist darüber hinaus, daß die möglichen Gesprächsteilnehmer, aus denen der Anrufende aussuchen kann, nicht ortsgebunden sind. Anders als bei bisher bekannten Call-Centern können die möglichen Gesprächsteilnehmer des Anrufenden dezentral organisiert sein. So ist beispielsweise vorstellbar, daß die möglichen Gesprächsteilnehmer in einer Art Homeoffice beispielsweise von Zuhause arbeiten. Sie melden sich telefonisch oder via Internet beim zentralen Vermittlungssystem als verfügbar an. Das Vermittlungssystem registriert die Verfügbarkeit und teilt diese dem Anrufenden entweder automatisch oder auf Anfrage des Anrufenden mit. Ist ein möglicher Gesprächsteilnehmer offline, hat er sich also beim Vermittlungssystem nicht angemeldet oder wieder abgemeldet, so ist dies dem Vermittlungssystem bekannt, weshalb dieses dem Anrufenden entweder automatisch oder auf Anfrage mitteilt, daß der gewünschte Gesprächsteilnehmer momentan nicht zur Verfügung steht. Der Anrufende kann dann entweder das Gespräch beenden oder über das Vermittlungssystem einen anderen Gesprächsteilnehmer auswählen, der von diesem als online geführt ist.

Gemäß einem weiteren Merkmal der Erfindung ist vorgesehen, daß an das Vermittlungssystem eine den Anrufenden identifizierende Information übertragen wird. Im einfachsten Fall kann dies beispielsweise der Name des Anrufenden sein, der dem Vermittlungssystem beispielsweise durch einfache Spracheingabe übermittelt wird. Selbstverständlich sind auch andere identifizierende Informationen an das Vermittlungssystem übertragbar, denn kommt es lediglich darauf an, daß das Vermittlungssystem den gewünschten Gesprächsteilnehmer übe die Identifikation des Anrufenden informieren kann. Die den Anrufenden identifizierende Information wird vom Vermittlungssystem vorzugsweise zwischengespeichert, so daß diese im weiteren Verlauf der Verfahrensabwicklung zur Verfügung steht. Als den Anrufenden identifizierende Informationen kommen auch Kundennummer, Rechnungsnummer, Vorgangsnummer oder dergleichen in Frage.

Gemäß einem weiteren Merkmal der Erfindung ist vorgesehen, daß an das Vermittlungssystem eine Rückrufnummer des Anrufenden übertragen wird, wobei die Rückrufnummer in einem Datenbankabgleich auf Gültigkeit überprüft wird. Diese Verfahrensvariante ist insbesondere dann von Vorteil, wenn der Anrufende unter einer anderen als dem Vermittlungssystem bekannten Rufnummer zurückgerufen werden möchte. Standardmäßig wird der Anrufende unter diejenige Rufnummer zurückgerufen, die das Vermittlungssystem bei Anruf durch den Anrufenden registriert. In Abweichung hierzu kann vorgesehen sein, daß der Anrufende dem Vermittlungssystem mitteilt, daß er unter eine andere Rufnummer zurückgerufen werden möchte. Diese Rufnummer teilt der Anrufende dem Vermittlungssystem auf Anfrage mit. Das Vermittlungssystem überprüft sodann zunächst einmal, ob die gewünschte Rückrufnummer gültig ist, d.h., ob es sich um eine Rückrufnummer handelt, über die im weiteren eine Gebührenabrechnung erfolgen kann. Überprüft wird die Rückrufnummer in einem Datenbankabgleich. Gültige Rufnummern bzw. gültige Rückrufnummern sind dem Grunde nach nur solche Rufnummern, die von der Deutschen Telekom vergeben sind. Dabei scheiden all solche Rufnummern aus, die Spezialrufnummern darstellen, wie z. B. 0190-Rufnummern, 0800-Rufnummern oder dergleichen.

Gemäß einem weiteren Merkmal der Erfindung ist vorgesehen, daß die den Anrufenden identifizierende Information und/oder die Rückrufnummer vom Vermittlungssystem automatisch an den vom Anrufenden gewählten Gesprächsteilnehmer weitergeleitet wird/werden. Der gewünschte Gesprächsteilnehmer ist so über die Identifikation des Anrufenden informiert. Auch weiß der gewünschte Gesprächsteilnehmer darüber Bescheid, unter welcher Rufnummer der Anrufende zurückgerufen werden möchte.

Sollte sich nach einer Gültigkeitsüberprüfung der vom Anrufenden angegebenen Rufnummer, sei es die Rufnummer, unter welcher der Anrufende das Vermittlungssystem anruft oder die vom Anrufenden angegebene Rückrufnummer, ergeben, daß diese nicht existent, gesperrt oder sonstwie nicht zugänglich für ein Telefongespräch hinsichtlich Kostenübernahme ist, so wird der Anrufende hierüber vom Vermittlungssystem automatisch informiert. Zu diesem Zweck stehen dem Vermittlungssystem entsprechende Ansagen, vorzugsweise in digitaler Form, zur Verfügung, die vom Vermittlungssystem verwaltet und bedarfsgerecht abgespielt werden können. Auch wird der Anrufende im Falle einer zum gewünschten Gesprächsteilnehmer besetzten Leitung informiert und darauf hingewiesen, daß ein Rückruf durch den gewünschten Gesprächsteilnehmer nicht sofort erfolgen kann.

Gemäß einem weiteren Merkmal der Erfindung ist vorgesehen, daß eine Statusüberprüfung des Anrufenden durchgeführt wird. Umfang der Statusüberprüfung ist eine Überprüfung dahingehend, ob der Anrufende kreditwürdig ist, unter Umständen noch offene Rechnungen ausstehen hat oder es in der Vergangenheit bereits zu Zahlungsproblemen gekommen ist. Sollte eine solche Statusüberprüfung ergeben, daß der Anrufende nicht kreditwürdig ist, so kann entweder vorgesehen sein, daß das Telefongespräch beendet oder aber beispielsweise nur unter der Auflage weitergeführt wird, daß der Anrufende beispielsweise durch Angabe seiner Kreditkartennummer zusätzliche Sicherheitsleistung zu bieten hat.

Bevor das Vermittlungssystem den Anrufenden um sein Einverständnis zur Kostenübernahme bittet, wird dieser über die derzeit gültigen Tarife vom Vermittlungssystem automatisch informiert. Auch diese Tarifinformation kann vorzugsweise in Form vorgefertigter und vom Vermittlungssystem verwalteter Sprachbausteine an den Anrufenden übertragen werden. In diesem Zusammenhang kann vorgesehen sein, daß der Anrufende während des Telefongesprächs in immer wiederkehrenden Zeitabständen wunschgemäß darüber informiert wird, welche Kosten bisher in Folge des Telefongesprächs angefallen sind.

Vorzugsweise ist der Anruf des Vermittlungssystems für den Anrufenden kostenlos. Erst nachdem der gewünschte Gesprächsteilnehmer den Anrufenden zurückgerufen hat und dieser das Zustandekommen der kommunikationstechnischen Verbindung durch Übernahme der Telefonkosten autorisiert hat, entstehen die vom Anrufenden zu übernehmenden Kosten. Für eine exakte Abrechnung wird daher der Zeitpunkt des Zustandekommens der kommunikationstechnischen Verbindung zwischen dem Anrufenden und dem gewünschten Gesprächsteilnehmer vom Vermittlungssystem erfaßt und die Zeit bis zur Beendigung der kommunikationstechnischen Verbindung gestoppt. Die sich hieraus ergebende Zeitdauer ergibt in Kombination mit dem für das Telefongespräch gültigen Tarif die vom Anrufenden zu zahlenden Gebühren. Erfindungsgemäß ist dabei vorgesehen, daß die zu zahlenden Gebühren automatisch vom Vermittlungssystem berechnet und dem Anrufenden in Rechnung gestellt werden. Die automatisch berechneten Rechnungsbeträge können zudem in der Datenbank des Vermittlungssystems gespeichert werden, um so bei der vorbeschriebenen Status- d.h. Gültigkeitsüberprüfung ein mögliches Ausschlußkriterium definieren zu können. Dies könnte sich beispielsweise dadurch ergeben, daß der Anrufende einer Begleichung einer noch immer offenen Rechnung bisher nicht nachgekommen ist, so daß die Rufnummer des Anrufers für die Vermittlung von Telefongesprächen solange gesperrt bleibt, bis die noch offene Rechnung bezahlt ist. Vorzugsweise ist daher auch der Zahlungseingang in der Datenbank des Vermittlungssystems zu speichern.

Gemäß einem weiteren Merkmal der Erfindung wird bei Ausbleiben der Autorisierung durch den Anrufenden die kommunikationstechnische Verbindung zwischen Anrufendem und gewünschtem Gesprächsteilnehmer getrennt. Kosten sind in diesem Falle für den Anrufenden nicht entstanden.

Gemäß einem weiteren Merkmal der Erfindung ist vorgesehen, daß der Anrufende aus einer Mehrzahl möglicher, zuvor beim Vermittlungssystem angemeldeter Gesprächsteilnehmer auswählt, wobei das Vermittlungssystem den Anrufenden über die zur Verfügung stehenden Gesprächsteilnehmer informiert. Eine solche Information des Anrufenden kann entweder automatisch oder auf Anfrage durch den Anrufenden erfolgen.

Gemäß einem weiteren Merkmal der Erfindung ist vorgesehen, daß die kommunikationstechnische Verbindung zwischen Anrufendem und Vermittlungssystem automatisch getrennt wird, wenn der Anrufende innerhalb einer vorgebbaren Zeitspanne auf eine Anfrage des Vermittlungssystems nicht reagiert. Eine solche Zeitspanne kann beispielsweise 2 bis 5 Sekunden betragen und wird automatisch geschaltet, wenn das Vermittlungssystem an den Anrufenden eine zur Herstellung einer kommunikationstechnischen Verbindung zwingenderweise zu beantwortende Frage richtet, die vom Anrufenden jedoch nicht beantwortet wird. So kann beispielsweise vorgesehen sein, daß die Verbindung zwischen Anrufendem und Vermittlungssystem nach Ablauf der vorgebbaren Zeitspanne automatisch getrennt wird, wenn der Anrufende auf die Frage des Vermittlungssystems, welchen Gesprächsteilnehmer er zu sprechen wünscht, schweigt. Gleiches kann gemäß einem weiteren Merkmal der Erfindung für die kommunikationstechnische Verbindung zwischen Anrufendem und gewünschtem Gesprächsteilnehmer gelten. Auch diese kommunikationstechnische Verbindung kann automatisch getrennt werden, wenn der Anrufende innerhalb einer vorgebbaren Zeitspanne, von beispielsweise 2 bis 5 Sekunden, nicht sein Einverständnis zur Gebührenübernahme erklärt.

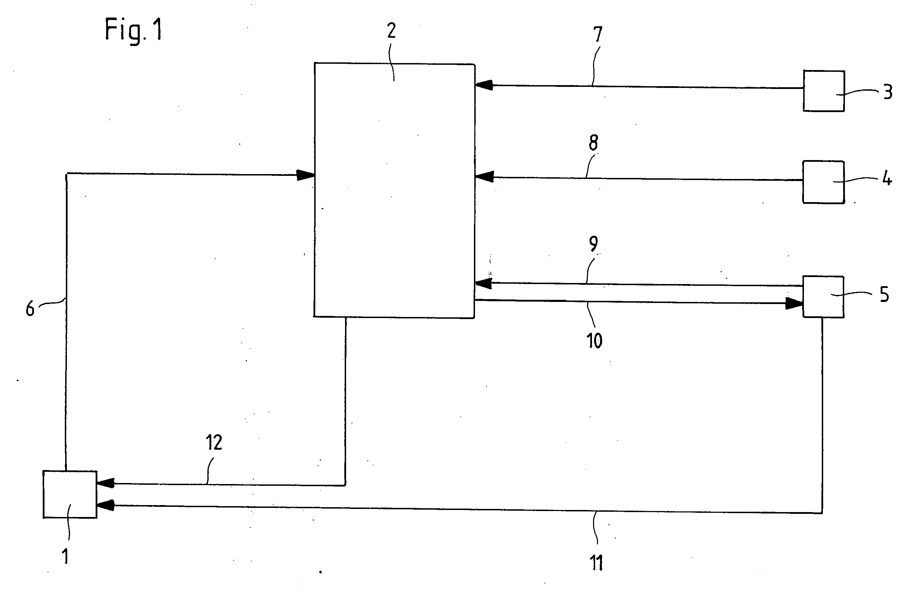

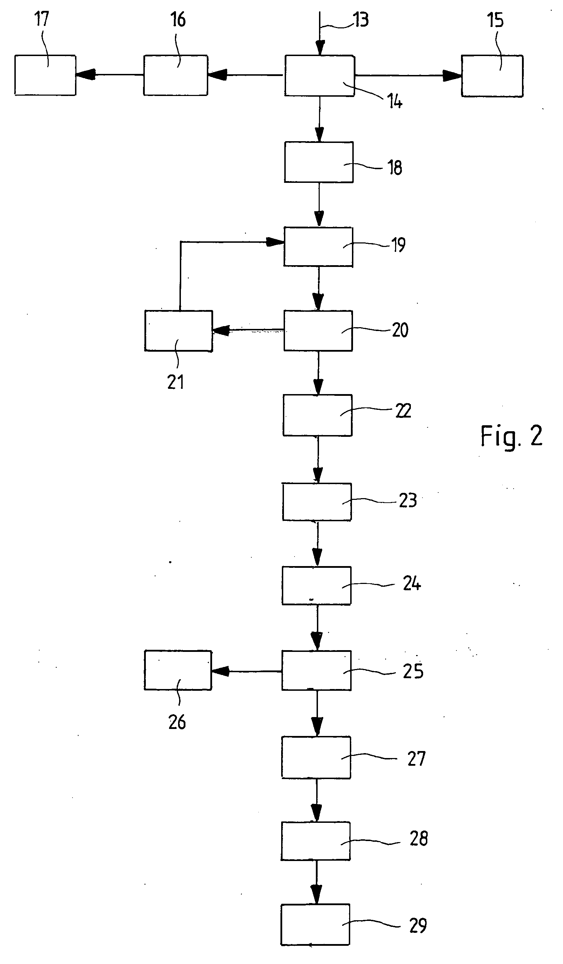

Weitere Merkmale und Vorteile der Erfindung ergeben sich aus der Beschreibung anhand der nachfolgenden Figuren 1 und 2, die jeweils schematisch einen beispielhaften Ablauf des erfindungsgemäßen Verfahrens zeigen.

Fig. 1 stellt in vereinfachter und schematischer Darstellung die Durchführung des erfindungsgemäßen Verfahrens dar, welches am Beispiel eines Call-Centers im nachfolgenden erläutert werden soll.

Der Anrufende 1 wünscht mit einem möglichen Gesprächsteilnehmer 3, 4 oder 5 des Call-Centers zu sprechen. Der Aufbau einer kommunikationstechnischen Verbindung zwischen dem Anrufenden 1 und einem der möglichen Gesprächsteilnehmer 3, 4 oder 5 geht wie folgt vonstatten. Der Anrufende 1 wählt das Call-Center unter der ihm bekannten zentralen Rufnummer an. Nach Anwahl des Call-Centers, was schematisch mit dem Pfeil 6 dargestellt ist, wird er mit dem Vermittlungssystem 2 verbunden. Die Rufnummer des Anrufenden 1 wird an das Vermittlungssystem 2 automatisch übertragen, welches die Rufnummer des Anrufenden 1 auf Gültigkeit überprüft. Ist die Gültigkeitsprüfung erfolgreich, so teilt das Vermittlungssystem 2 dem Anrufenden 1 mit, daß es seinen Anruf entgegengenommen hat und bittet ihn, den gewünschten Gesprächsteilnehmer zu benennen. Zu diesem Zweck kann entweder vorgesehen sein, daß das Vermittlungssystem 2 dem Anrufenden eine Auswahlliste der möglichen Gesprächsteilnehmer nennt oder aber, daß er Anrufende 1 einen Gesprächsteilnehmer benennt, wobei in diesem Fall das Vermittlungssystem 2 überprüft, ob der gewünschte Gesprächsteilnehmer überhaupt verfügbar ist. Welche Gesprächsteilnehmer verfügbar sind, ist vom Vermittlungssystem 2 registriert, und zwar dadurch, daß sich die derzeit zur Verfügung stehenden Gesprächsteilnehmer beim Vermittlungssystem 2 angemeldet haben. Eine solche Anmeldung kann beispielsweise per Internet oder telefonisch erfolgen. Nach erfolgter Anmeldung ist das Vermittlungssystem 2 in jedem Fall darüber informiert, welche Gesprächsteilnehmer zur Verfügung stehen, so daß es eine Überprüfung dahingehend vornehmen kann, ob der vom Anrufenden 1 gewünschte Gesprächsteilnehmer zur Verfügung steht. Ergibt die Verfügbarkeitsprüfung, daß der vom Anrufenden 1 gewünschte Gesprächsteilnehmer zur Verfügung steht, so teilt das Vermittlungssystem 2 dieses dem Anrufenden 1 mit. In der Fig. ist diese Informationsvermittlung an den Anrufenden 1 mit dem Pfeil 12 gekennzeichnet. Die kommunikationstechnische Verbindung zwischen Vermittlungssystem 2 einerseits und Anrufenden 1 andererseits wird sodann getrennt.

Wie bereits vorstehend beschrieben, weiß das Vermittlungssystem 2 über die zur Auswahl stehenden Gesprächsteilnehmer 3, 4 oder 5 Bescheid. Diese haben sich beim Vermittlungssystem 2 angemeldet, was bezüglich des Gesprächsteilnehmers 3 durch den Pfeil 7, bezüglich des Gesprächsteilnehmers 4 durch den Pfeil 8 und bezüglich des Gesprächsteilnehmers 5 durch den Pfeil 9 graphisch dargestellt ist.

Hat der Anrufende 1 dem Vermittlungssystem 2 mitgeteilt, daß er beispielsweise mit dem Gesprächsteilnehmer 5 eine kommunikationstechnische Verbindung wünscht, so teilt das Vermittlungssystem 2 dies dem Gesprächsteilnehmer 5 mit. Dies ist in Fig. 1 mit dem Pfeil 10 graphisch dargestellt. Das Vermittlungssystem 2 überträgt an den Gesprächsteilnehmer 5 die von ihm bezüglich des Anrufenden 1 aufgenommenen Informationen, insbesondere die vom Anrufenden 1 angegebene Rückrufnummer. Diese Rückrufnummer kann mit der Rufnummer, die das Vermittlungssystem 2 nach Anruf durch den Anrufenden 1 ermittelt hat, identisch sein. Auch ist es möglich, daß der Anrufende 1 dem Vermittlungssystem 2 eine besondere Rückrufnummer mitteilt, welche der gewünschte Gesprächsteilnehmer zu wählen hat. In jedem Fall aber findet durch das Vermittlungssystem 2 eine Überprüfung der vom Anrufenden 1 angegebenen Nummer statt, sei es die Rufnummer des Anrufenden 1 oder die vom Anrufenden 1 explizit genannte Rückrufnummer. Verläuft diese Gültigkeitsprüfung negativ, d. h. ist die vom Anrufenden 1 angegebene Rufnummer bzw. Rückrufnummer ungültig, gesperrt oder sonst wie nicht dazu geeignet, im Rahmen eines R-Gespräches vom gewünschten Gesprächsteilnehmer angerufen zu werden, so teilt das Vermittlungssystem 2 dies dem Anrufenden 1 mit und fordert ihn dazu auf, eine gültige Rufnummer zu benennen. Wird eine solche gültige Rufnummer nicht benannt oder verstreicht eine vorgebbare Zeitspanne, innerhalb welcher sich der Anrufende 1 nicht erklärt bzw. eine gültige Rufnummer angibt, so wird die kommunikationstechnische Verbindung zwischen Anrufendem 1 und Vermittlungssystem 2 getrennt. Ein Rückruf durch einen gewünschten Gesprächsteilnehmer findet dann nicht statt.

Verläuft die Rufnummernüberprüfung positiv, so ruft der vom Anrufenden 1 dem Vermittlungssystem 2 zuvor als gewünschter Gesprächsteilnehmer benannte Gesprächsteilnehmer den Anrufenden 1 zurück. In der graphischen Darstellung nach Fig. 1 ist dieser Rückruf durch den Pfeil 11 symbolisiert.

Der Anrufende 1 wird vom rückrufenden Gesprächsteilnehmer 5 darüber informiert, daß es sich bei dem Rückruf um ein sogenanntes R-Gespräch handelt, d. h. die anfallenden Gebühren durch den Anrufenden 1 zu tragen sind. Eine solche Informationsvermittlung kann automatisch über das Vermittlungssystem 2 erfolgen, wobei der Anrufende 1 vorzugsweise auch über die derzeit gültigen Tarife und/oder Gebühren informiert wird. Autorisiert der Anrufende 1 den eingehenden Rückruf, d. h. stimmt er einer Kostenübernahme zu, so wird über das Vermittlungssystem 2 eine kommunikationstechnische Verbindung zwischen gewünschtem Gesprächsteilnehmer 5 und Anrufenden 1 geschlossen.

Nach erfolgreich durchgeführtem Telefonat berechnet das Vermittlungssystem 2 automatisch die für die Gesprächsdurchführung angefallenen Kosten und stellt diese dem Anrufenden 1 in Rechnung.

Fig. 2 zeigt die erfindungsgemäße Verfahrensdurchführung in einem schematischen Ablaufdiagramm detaillierter. Nach diesem beispielhaft dargestellten Ablaufdiagramm wird das erfindungsgemäße Verfahren wie folgt durchgeführt:
Der eingehende Anruf 13 des Anrufenden wird in einer Datenbank 14 vom Vermittlungssystem auf Gültigkeit überprüft. Dabei umfaßt die Gültigkeitsüberprüfung sowohl eine Überprüfung der Gültigkeit der Rufnummer als auch eine Statusüberprüfung des Anrufenden. Im Rahmen der Rufnummerüberprüfung wird dabei festgestellt, ob die Rufnummer des Anrufenden dazu geeignet ist, im Rahmen eines R-Gespräches zurückgerufen zu werden. Im Rahmen der Statusüberprüfung wird festgestellt, ob der Anrufende kreditwürdig ist. Ergibt die Gültigkeitsüberprüfung, daß der Anrufende 1 mit einem negativen Status besetzt ist, d. h. nicht kreditwürdig ist, so wird dies dem Anrufenden 1 vom Vermittlungssystem mit einer entsprechenden Ansage 15 mitgeteilt und das Gespräch wird beendet. Fällt die Gültigkeitsüberprüfung negativ aus, weil die angegebene Rufnummer nicht gültig, der Status des Anrufenden aber positiv ist, so wird dies dem Anrufenden gemäß 16 mitgeteilt und er wird auf die Möglichkeit hingewiesen, anstelle eines gebührenpflichtigen Rückrufes von der Möglichkeit einer gebührenpflichtigen Nummer, wie z. B. einer 0190-Nummer gemäß Ansage 17 Gebrauch zu machen. Fällt die Überprüfung des Anrufenden 1 positiv aus, so wird er vom Vermittlungssystem gemäß Ansage 18 begrüßt.

Alsdann erfolgt bei 19 die Aufforderung des Vermittlungssystems an den Anrufenden, daß dieser als nächstes den von ihm gewünschten Gesprächsteilnehmer zu identifizieren hat. Die entsprechende Eingabe 20 des Anrufenden wird vom Vermittlungssystem auf Verfügbarkeit überprüft, d.h. es wird festgestellt, ob der vom Anrufenden identifizierte Gesprächsteilnehmer überhaupt erreichbar ist. Ist der gewünschte Gesprächsteilnehmer nicht verfügbar, so wird dies dem Anrufenden bei 21 mitgeteilt und erhält die Möglichkeit, eine neue Eingabe 20 zu tätigen. Ergibt die Verfügbarkeitsüberprüfung, daß der gewünschte Gesprächsteilnehmer zur Verfügung steht, so wird dies dem Anrufenden bei 22 mitgeteilt und er wird aufgefordert, seine Rückrufnummer anzugeben. Diese Rückrufnummer kann die schon bereits überprüfte Rufnummer des Anrufenden oder eine andere Rückrufnummer sein. Sollte der Anrufende eine andere als die bereits schon überprüfte Rufnummer als Rückrufnummer angeben, so wird diese Rückrufnummer auf Gültigkeit in der schon vorbeschriebenen Weise überprüft. Ergibt die Überprüfung der Rückrufnummer, daß diese gültig ist, so wird die kommunikationstechnische Verbindung zwischen Vermittlungssystem und Anrufenden getrennt.

Für eine bessere Transparenz kann alternativ zum Vorbeschriebenen vorgesehen sein, daß die vom Anrufenden gewünschte Rückrufnummer vom Vermittlungssystem dem Anrufenden zwecks Kontrolle vorgespielt wird. Dieser hat dann die Rückrufnummer zu bestätigen. Auch kann vorgesehen sein, daß der Anrufende sich gegenüber dem Vermittlungssystem zu identifizieren hat, beispielsweise durch Angabe seines Namens, durch Eingabe einer Kundennummer, durch Eingabe einer Rechnungsnummer oder dergleichen.

Vom Vermittlungssystem werden alsdann die anruferspezifischen Informationen bei 23 an den vom Anrufenden gewünschten Gesprächsteilnehmer weitergeleitet. Der gewünschte Gesprächsteilnehmer ruft bei 24 den Anrufenden zurück, und zwar im Rahmen eines sogenannten R-Gespräches, d. h. die in Folge des Rückruftelefonats entstehenden Kosten werden dem Anrufenden in Rechnung gestellt.

Bevor es jedoch zu einer kommunikationstechnischen Verbindung zwischen dem gewünschten Gesprächsteilnehmer und dem Anrufenden kommt, wird zuvor bei 25 die Autorisierung des Anrufenden zur Übernahme der Telefonkosten abgefragt. Autorisiert der Anrufende die entstehenden Kosten nicht, so wird das Telefongespräch unterbrochen und der Anrufende wird hierüber gemäß Ansage 26 informiert. Autorisiert der Anrufende bei 27 die Kostenübernahme, so wird zwischen dem Anrufenden und dem gewünschten Gesprächsteilnehmer bei 28 eine kommunikationstechnische Verbindung vom Vermittlungssystem aufgebaut. Das Vermittlungssystem stoppt die Zeit des geführten Telefonates und berechnet unter Zugrundelegen der dem Anrufenden zuvor mitgeteilten Tarife die entstandene Telefongebühr. Diese wird dem Anrufenden bei 29 automatisch in Rechnung gestellt.

## Patentansprüche

1. Verfahren zur Vermittlung eines Telefongespräches zwischen einem Anrufenden und einem vom Anrufenden aus einer Mehrzahl möglicher Gesprächsteilnehmer auswählbaren Gesprächsteilnehmer, bei dem die Rufnummer des Anrufenden an ein Vermittlungssystem übertragen und in einem Datenbankabgleich auf Gültigkeit überprüft wird, bei dem vom Anrufenden eine den vom Anrufenden gewünschten Gesprächsteilnehmer identifizierende Information an das Vermittlungssystem übertragen wird, wobei die Verfügbarkeit des vom Anrufenden gewünschten Gesprächsteilnehmer vom Vermittlungssystem geprüft und die bestehende kommunikationstechnische Verbindung zwischen Anrufendem und Vermittlungssystem im Falle der Verfügbarkeit getrennt wird, bei dem der vom Anrufenden gewünschte Gesprächsteilnehmer vom Vermittlungssystem über die eingegangene Telefongesprächsanfrage des Anrufenden automatisch informiert wird, bei dem der vom Anrufenden gewünschte Gesprächsteilnehmer den Anrufenden zurückruft, wobei durch das Vermittlungssystem erst nach einer vorhergehenden Autorisierung durch den Anrufenden eine kommunikationstechnische Verbindung zwischen Anrufendem und gewünschtem Gesprächsteilnehmer aufgebaut wird und bei dem nach erfolgtem Telefongespräch zwischen Anrufendem und gewünschtem Gesprächsteilnehmer die hierfür zu zahlende Gebühr vom Vermittlungssystem automatisch berechnet und dem Anrufenden in Rechnung gestellt wird.

2. Verfahren nach Anspruch 1, **dadurch gekennzeichnet, daß** an das Vermittlungssystem eine den Anrufenden identifizierende Information übertragen wird.

3. Verfahren nach Anspruch 1 oder 2, **dadurch gekennzeichnet, daß** die den Anrufenden identifizierende Information gespeichert wird.

4. Verfahren nach einem der vorhergehenden Ansprüche, **dadurch gekennzeichnet, daß** an das Vermittlungssystem eine Rückrufnummer des Anrufenden übertragen wird, wobei die Rückrufnummer in einem Datenbankabgleich auf Gültigkeit überprüft wird.

5. Verfahren nach einem der vorhergehenden Ansprüche, **dadurch gekennzeichnet, daß** die den Anrufenden identifizierende Information und/oder die Rückrufnummer vom Vermittlungssystem automatisch an den vom Anrufenden gewünschten Gesprächsteilnehmer weitergeleitet wird/werden.

6. Verfahren nach einem der vorhergehenden Ansprüche, **dadurch gekennzeichnet, daß** eine Statusüberprüfung des Anrufenden durchgeführt wird.

7. Verfahren nach einem der vorhergehenden Ansprüche, **dadurch gekennzeichnet, daß** bei Ausbleiben der Autorisierung durch den Anrufenden die kommunikationstechnische Verbindung zwischen Anrufendem und gewünschtem Gesprächsteilnehmer unterbrochen wird.

8. Verfahren nach einem der vorhergehenden Ansprüche, **dadurch gekennzeichnet, daß** der Anrufende aus einer Mehrzahl möglicher, zuvor beim Vermittlungssystem angemeldeter Gesprächsteilnehmer auswählt, wobei das Vermittlungssystem den Anrufenden über die zur Verfügung stehenden Gesprächsteilnehmer informiert.

9. Verfahren nach einem der vorhergehenden Ansprüche, **dadurch gekennzeichnet, daß** der Anrufende vom Vermittlungssystem über die gültigen Gebühren/Tarife informiert wird.

10. Verfahren nach einem der vorhergehenden Ansprüche, **dadurch gekennzeichnet, daß** die kommunikationstechnische Verbindung zwischen Anrufendem und Vermittlungssystem automatisch getrennt wird, wenn der Anrufende innerhalb einer vorgebbaren Zeitspanne auf die Anfrage des Vermittlungssystems nicht reagiert.

11. Verfahren nach einem der vorhergehenden Ansprüche, **dadurch gekennzeichnet, daß** die kommunikationstechnische Verbindung zwischen Anrufendem und gewünschtem Gesprächsteilnehmer automatisch getrennt wird, wenn der Anrufende innerhalb einer vorgegebenen Zeitspanne nicht sein Einverständnis zur Gebührenübernahme erklärt.
